Europäisches Patentamt

European Patent Office

Office européen des brevets

(19)

(11) Veröffentlichungsnummer: **0 121 062**
**B1**

(12) EUROPÄISCHE PATENTSCHRIFT

(45) Veröffentlichungstag der Patentschrift:
09.04.86

(21) Anmeldenummer: 84101484.8

(22) Anmeldetag: 14.02.84

(51) Int. Cl.⁴: **E 05 F 11/14,** F 16 H 19/00,
A 01 G 9/24

(54) Zahnstangentrieb, insbesondere zur Betätigung von Fensterflügeln.

(30) Priorität: 28.02.83 EP 83101933

(43) Veröffentlichungstag der Anmeldung:
10.10.84 Patentblatt 84/41

(45) Bekanntmachung des Hinweises auf die Patenterteilung:
09.04.86 Patentblatt 86/15

(84) Benannte Vertragsstaaten:
AT BE CH DE FR GB IT LI NL SE

(56) Entgegenhaltungen:
FR - A - 1 096 184
FR - A - 2 204 167
FR - A - 2 338 370
GB - A - 263 406
US - A - 3 267 751

(73) Patentinhaber: Johannes Lock Windenfabrik und
Maschinenbau, D-7943 Ertingen (DE)

(72) Erfinder: Fluhr, Berthold, Salem-Scheuer-Strasse 30,
D-7943 Ertingen (DE)
Erfinder: Lock, Freimut, INdustriestrasse 2,
D-7943 Ertingen (DE)

(74) Vertreter: Patentanwälte Dipl.-Ing. E. Eisele Dr.-Ing. H.
Otten, Seestrasse 42, D-7980 Ravensburg (DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

LIBER, STOCKHOLM 1986

## Beschreibung

Die Erfindung bezieht sich auf einen Zahnstangentrieb, insbesondere zur Betätigung von Fensterflügeln, mit einem feststehenden Lagergehäuse, in welchem ein Ritzel oder eine mit dem Ritzel fest verbundene Antriebswelle drehbar gelagert ist, und mit einer Zahnstange, die mittels eines um die Ritzelachse schwenkbaren Führungsteils mit dem Ritzel in Eingriff gehalten wird.

Ein Zahnstangentrieb dieser Art, wie er beispielsweise aus der Deutschen Patentschrift 21 60 280 oder der US-A- US-A-3 267 751 bekannt geworden ist, hat zwei wesentliche Funktionsmerkmale, die insbesondere bei Gewächshäusern von Bedeutung sind, deren in einer Reihe angeordnete Lüftungsflügel gemeinsam betätigt werden. Das eine Merkmal ist die Schwenkbarkeit der Zahnstange um die Ritzelachse, damit die Zahnstange der bogenförmigen Bewegungsbahn des Angriffspunktes der Zahnstange am Fensterrahmen folgen kann. Das andere Merkmal besteht darin, daß die Antriebswelle an den gleichen Stellen gelagert ist, an denen sie über die einzelnen Ritzel die Zahnstangenkräfte, beispielsweise das auf die Zahnstangen drückende Gewicht der Fensterflügel, aufzunehmen hat. Dadurch wird eine Biegebeanspruchung der Antriebswelle vermieden.

Bei der bekannten Konstruktion nach der vorerwähnten Patentschrift ist eine querschnittlich U-förmige Zahnstange vorgesehen und ein Ritzel mit Triebstockverzahnung, bestehend aus zwei Scheiben, die durch kreisförmig angeordnete Nietbolzen miteinander verbunden sind, wobei jeder Nietbolzen von einer drehbaren Hülse umgeben ist. Ein feststehender, alle Hülsen umschließender Tragring dient als Lager für dieses Ritzel und das Führungsteil besteht aus zwei Bügeln, an deren Schenkelenden Rollen angebracht sind. Die Bügel liegen in ihrem Scheitelbereich neben dem Tragring auf den Hülsen des Ritzels auf und ziehen mit ihren Rollen die Zahnstange an das Ritzel heran.

Nachteilig an dieser Konstruktion ist ihre geringe Tragkraft. Die Einzelteile sind durchweg aus Blech gefertigt. Durch die vielen Rollen und Bolzen ergeben sich viele Ver-schleißstellen. Sollen aber große Fensterflügel betätigt und müssen zusätzliche Windkräfte beherrscht werden, so sind tragfähigere Lagerstellen vonnöten, was letztlich zu sehr komplizierten und aufwendigen Konstruktionen führt. Beispielhaft hierfür sind die Deutsche Auslegeschrift 10 50 229 und die Britische Patentschrift 117 876. Diekonstruktiven Schwierigkeiten kommen daher, daß zu beiden Seiten des Ritzels drei relativ zueinander drehbare Teile, nämlich das Lagergehäuse, das Ritzel (die Antriebswelle) und das Führungsteil, aneinander oder ineinander gelagert werden müssen.

Der Erfindung liegt die Aufgabe zugrunde, einen für größte Zahnstangenbelastungen geeigneten Zahnstangentrieb vorzuschlagen, der einfach aufgebaut und dementsprechend zuverlässig, wartungsfrei und kostengünstig ist.

Diese Aufgabe wird ausgehend von einem Zahnstangentrieb der einleitend bezeichneten Art erfindungsgemäß dadurch gelöst, daß das Lagergehäuse eine zum Ritzel gleichachsige kreisbogenförmige Innenlagerfläche aufweist, und daß das Führungsteil als gleitfähiger Stützkörper ausgebildet ist, der zwischen dem Rücken der Zahnstange und der Innenlagerfläche eingepaßt ist. Der Krümmungsradius der vorzugsweise zylindrischen Innenlagerfläche für den Stützkörper kann größer oder kleiner als der Abstand der Zahnstangenrückenfläche von der Ritzelachse sein. Im einen Fall ist der Stützkörper prinzipiell ein nur auf Druck beanspruchter Klotz. Im anderen Fall übergreift der Stützkörper die Zahnstange und läuft mit zwei seitlich angeordneten, Außenlagerflächen aufweisenden Ansätzen auf zwei Innenlager-Flächenbahnen zu beiden Seiten des Ritzels. Anstelle der Ansätze können auch am Stützteil gelagerte Rollen vorgesehen sein, die sich auf den Innenlagerflächen abwälzen.

Jedenfalls liegt die Innenlagerfläche für den Stützkörper radial weiter außen am Lagergehäuse als die Innenlagerfläche für das Ritzel oder die Antriebswelle, sofern diese mit dem Ritzel ein Stück bildet. Der Konstrukteur ist deshalb hinsichtlich der Ausbildung der zuletzt genannten Lagerstelle völlig frei, er kann z. B. serienmäßige Gleitlager- oder Kugellagerteile verwenden.

Damit wird das Konstruktionsprinzip der bekannten Führungsteile verlassen, welche sowohl die Zahnstange als auch die Antriebswelle umgreifen und somit auf einer (konvexen) Außenlagerfläche aufliegen. Statt dessen stützt der Stützkörper die Zahnstange gegenüber der radial weiter außen liegenden (konkaven) Innenlagerfläche ab, wobei er an der Innenlagerfläche gleitet und dadurch die notwendige Schwenkbewegung der Zahnstange ermöglicht.

Das Lagergehäuse hat zweckmäßigerweise die Form einer das Ritzel umschließenden flachen Dose, bestehend aus zwei Halbschalen, in denen - vorzugsweise mittels je eines Lagerrings aus Kunststoff, Bronze oder eines Kugellagerrings - das Ritzel gelagert ist und deren Umfangswandungen die Innenlagerfläche bilden, wobei Fensteröffnungen zum Durchtritt der Zahnstange zwischen den Halbschalen freigespart sind. Diese Fensteröffnungen müssen so groß sein, daß sie die notwendige Schwenkbewegung der Zahnstange nicht behindern. Vorzugsweise füllt der Stützkörper den kreisabschnittförmigen Raum zwischen dem Rücken der Zahnstange und der Innenlagerfläche aus.

Um der Zahnstange auch eine seitliche Führung zu geben, wird vorgeschlagen, daß der Stützkörper die Zahnstange umgreift und ihre Flanken an Radialflächen des Lagergehäuses abstützt. Damit wird ein Kippen der Zahnstange verhindert und eine auf sie wirkende Axialkraft aufgefangen.

Weiter wird vorgeschlagen, daß der Stützkörper in Umfangsrichtung der Innenlagerfläche verlängert ist und dem Zahnstangenquerschnitt genau entsprechende Durchlässe aufweist. Auf diese Weise verschließt der Stützkörper die vergrößerten Fensteröffnungen des Lagergehäuses, wirkt dadurch als Fingerschutz und verhindert das Eindringen von Schmutz und Fremdkörpern. Schließlich können die Verlängerungen des Stützkörpers an den Enden zu einem vollständigen Ring vereinigt sein, sofern auch die Innenlagerfläche vollkreisförmig ist. Jede Verlängerung und insbesondere die Vollkreisform des Stützkörpers hat den Vorteil, daß der Stützkörper und die Zahnstange sich nicht im Lagergehäuse verklemmen können.

Das Ritzel kann eine hohle Nabe aufweisen oder in eine Hohlnabe oder Hülse eingearbeitet sein. Die Hohlnaben können dann auf eine längere gemeinsame Antriebswelle aufgesteckt und an dieser befestigt werden. Ebenso kann das Ritzel aber auch einen unrunden Durchbruch zum Einstecken einer profilierten Antriebswelle aufweisen oder als Vollwelle ausgelegt sein. Schließlich kann das Ritzel über einen zusätzlichen Schnecken- oder Zahnradtrieb angetrieben werden, der am Lagergehäuse angeordnet sein kann.

Werden die Lagergehäuseteile im Hinblick auf die zusätzlichen Innenlagerflächen für den Stützkörper spanabhebend auf Drehmaschinen gefertigt, erfordert dies einen nicht unerheblichen Aufwand. Deshalb wird eine besonders rationell herstellbare Ausführungsform in der Weise vorgeschlagen, daß das Lagergehäuse zwei in einem Abstand miteinander verbundene, zueinander parallele Seitenwände aufweist, in denen das Ritzel gelagert ist und die nierenförmige Schlitze aufweisen, deren radial äußere Ränder die Innenlagerfläche bilden und in die ein Stützkörper mit seitlich angeordneten, der Schlitzbreite entsprechenden Ansätzen in Umfangsrichtung gleitfähig eingreift. Vorzugsweise bestehen diese beiden Seitenwände aus einem Flachmaterial und werden durch Stanzen, insbesondere durch das genaue Feinstanzen, fertig bearbeitet. Dadurch sind sie außergewöhnlich preisgünstig. Zweckmäßigerweise werden zur gegenseitigen Verbindung rohrförmige Distanzstücke vorgesehen, deren im Durchmesser reduzierte Enden in Bohrungen der Seitenwände des Lagergehäuses eingreifen und außen umgehördelt sind.

Der Stützkörper besteht bei dieser und der zuvor beschriebenen Ausführungsform vorzugsweise aus einem gleitfähigen Kunststoff und kann als Spritzteil gefertigt werden. Er übergreift den Rücken der Zahnstange und stützt sie beim Auftreten von Querkräften gegenüber den Seitenwänden gleitfähig ab. Die nierenförmigen Ansätze, welche in die zum Ritzellager konzentrischen Führungsschlitze eingreifen, sind an den die Seitenflächen der Zahnstange bedeckenden Partien des Stützkörpers angeformt. Dadurch ergeben sich verhältnismäßig kleine Lagergehäuse.

Da die Lagerreibung der Antriebswelle gering gehalten und Überlastungen der Zahnstangentriebe stets ausgeschlossen werden sollen, ist die Montage der Lagergehäuse am Bau stets ein Problem. Außerdem neigen die langen Antriebswellen zu Durchbiegungen. Häufig liegen auch die Lagerachsen der Fensterflügel nicht genau in der Flucht oder sie verlaufen nicht parallel zur Antriebsachse. Statt deshalb die Lagergehäuse nach vorhergehender genauer Vermessung mit großem Aufwand starr an der Unterlage zu befestigen, wird vorgeschlagen, daß Eefestigungsorgane vorgesehen sind, die mit allseitigem Spiel in Aussparungen des Lagergehäuses eingreifen und dieses nachgiebig an der Unterlage haltern. Dadurch kann das Lagergehäuse sowohl den Biegungen der Antriebswelle als auch jeglichen Ausweich- oder Torsionsbewegungen der Zahnstange unter Belastung ausweichen, wodurch die Materialbeanspruchungen oder Reibungswiderstände erheblich verringert werden. Insbesondere wird vorgeschlagen, daß die Befestigungsorgane als U-förmig gebogene Rundstahlteile mit Schraubgewinden an den Schenkelenden ausgebildet sind, die mit wenigstens einem Schenkel das Lagergehäuse locker durchsetzen. Solche Befestigungsorgane haben trotz ihrer verhältnismäßig geringen Dicke eine wesentlich höhere Biegefestigkeit als einfache Stehbolzen.

Zur Lösung besonderer Antriebsprobleme kann es zweckmäßig sein, zwei mit einem Ritzel kämmende gegenläufige Zahnstangen mit je eigenen Stützkörpern vorzusehen. Dies erfordert gegebenenfalls eine Vergrößerung der Fensteröffnungen eines dosenförmigen Lagergehäuses und je zwei Bogenschlitze in den Seitenwänden aus Flachmaterial. Insbesondere können der Deckel und Boden bzw. die Seitenwände des Lagergehäuses statt an drei Stellen an nur zwei einander diametral gegenüberliegenden Stellen miteinander verbunden sein, so daß die beiden Zahnstangen in einem vergrößerten Winkelbereich von nahezu 180° unabhängig voneinander schwenken können.

Ein Ausführungsbeispiel der Erfindung wird nachfolgend anhand der Zeichnung erläutert. Im einzelnen zeigt

Fig. 1 eine räumliche Darstellung eines Zahnstangentriebs,

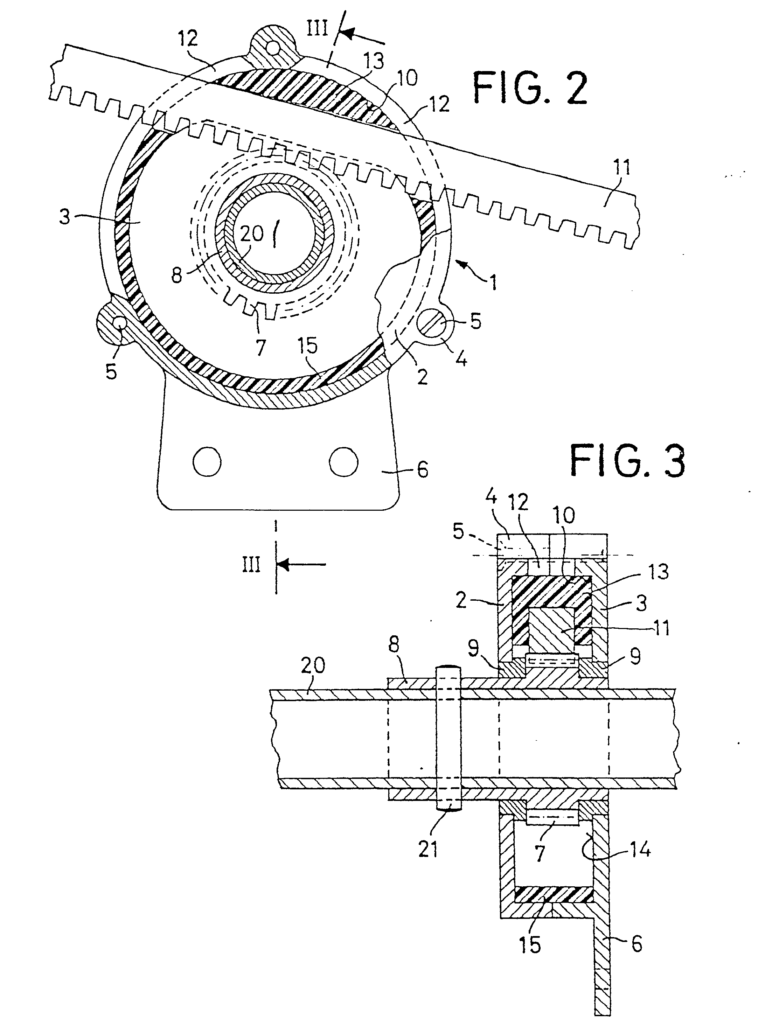

Fig. 2 einen Radialschnitt des Zahnstangentriebes nach Fig. 1,

Fig. 3 einen Axialschnitt III-III des Zahnstangentriebes nach Fig. 1,

Fig. 4 ein schematisches Anwendungsbeispiel des Zahnstangentriebes nach Fig. I in kleinerem Maß-stab,

Fig. 5 die Seitenansicht eines anderen, nachgiebig an einem Winkeleisen befestigten Zahnstangentriebes,

Fig. 6 einen Axialschnitt VI-VI des Zahnstangentriebes nach Fig. 5,

Fig. 7 einen Axialschnitt VII-VII eines rohrförmigen Distanzstückes nach Fig. 5 und

Fig. 8 eine räumliche Darstellung des Stützkörpers des Zahnstangentriebes nach den Figuren 5 und 6.

Das Lagergehäuse 1 besteht im Beispiel aus zwei runden Halbschalen 2 und 3, die je drei um 120° gegeneinander versetzte Augen 4 aufweisen und mittels dreier Schrauben S miteinander verbunden sind. An der Halbschale 3 ist eine Befestigungslasche 6 angeformt. Ein Ritzel 7 bildet ein Stück mit einer Hohlnabe 8, welche mittels zweier Lagerringe 9 in den Halbschalen 2, 3 gelagert ist und nach einer Seite aus dem Lagergehäuse 1 hervorsteht. Die zylindrischen Randstreifen der Halbschalen bilden auf ihrer Innenseite eine Innenlagerfläche 10.

Mit dem Ritzel 7 kämmt eine Zahnstange 11, welche durch zwei Fensteröffnungen 12 tritt, die durch Randaussparungen der Halbschalen 2, 3 gebildet sind und sich je über einen Bogen von nahezu 120° erstrecken. In dem Lagergehäuse 1 befindet sich ein insgesamt mit 13 bezeichneter Stützkörper aus einem gleitfähigen Kunststoff. Die kreisabschnittförmige Hauptpartie des Stützkörpers 13 umgreift die Zahnstange 11 und füllt den Raum zwischen dem Rücken der Zahnstange und der Innenlagerfläche 10 sowie zwischen den Zahnstangenflanken und den ebenen Innenflächen 14 der Halbschalen 2, 3 aus. Die sich verjüngenden Enden der Hauptpartie des Stützkörpers 13 sind miteinander verbunden und bilden einen Ring 15, der die gesamte übrige Innenlagerfläche 10 belegt.

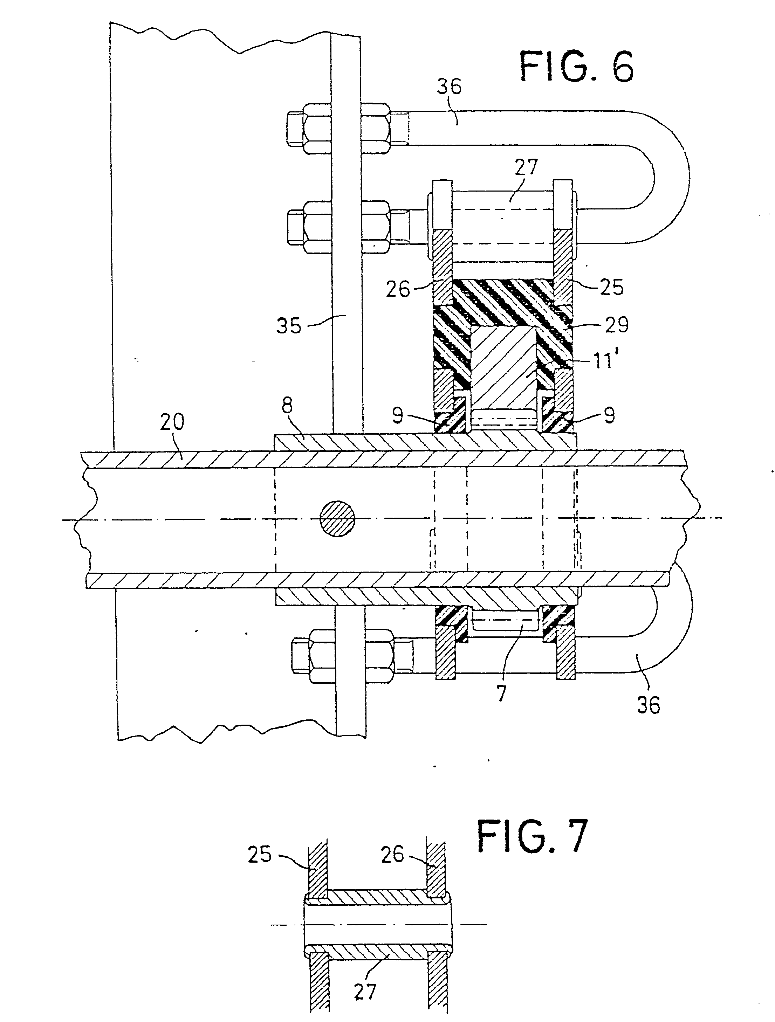

Die Skizze nach Fig. 4 zeigt ein Anwendungsbeispiel für den beschriebenen Zahnstangentrieb. Ein um die Achse 16 schwenkbarer Fensterflügel 17 ist über ein Gelenk 18 mit der Zahnstange 11 verbunden. Das Lagergehäuse 1 ist an einem festen Gebäudeteil 19 angeschraubt.

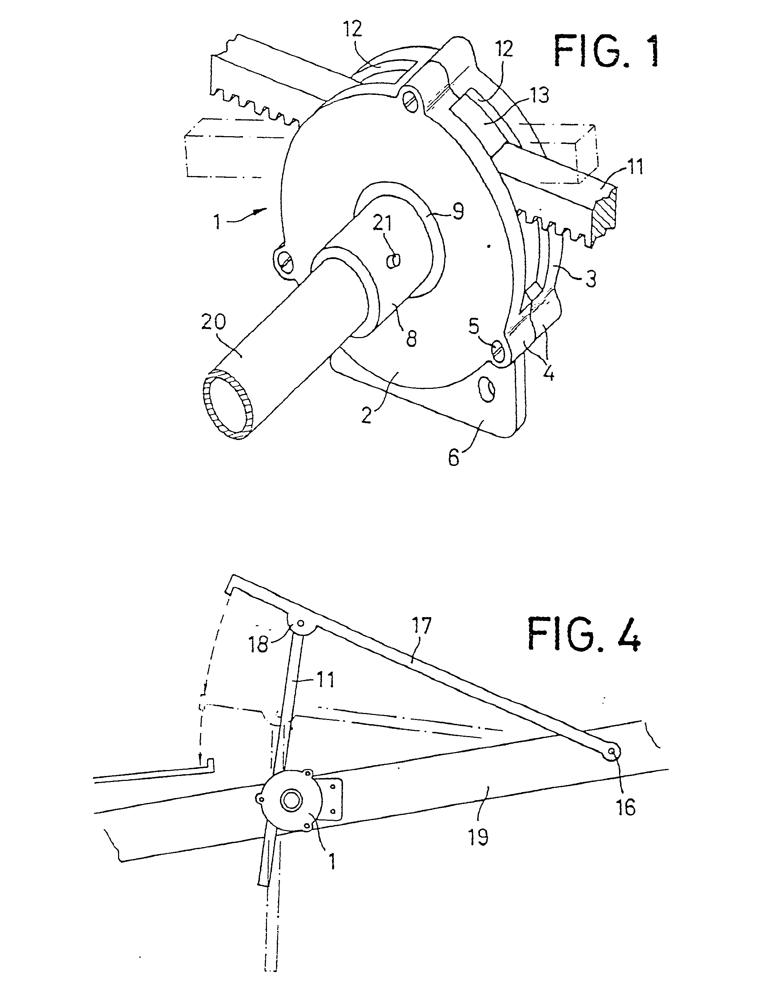

Über eine rohrförmige Antriebswelle 20, die durch die Hohlnabe 8 gesteckt und mittels eines Querstiftes 21 mit dieser fest verbunden ist, wird das Ritzel 7 angetrieben. Die gleichzeitig mit ihrer Längsbewegung eintretende Schwenkbewegung der Zahnstange 11 ist möglich, weil der Stützkörper 13 im Lagergehäuse 1, insbesondere auf der Innenlagerfläche 10 gleitet und außerdem die Fensteröffnungen 12 groß genug sind. Fig. 1 zeigt, wie unabhängig von der Schwenklage der Zahnstange 11 die Fensteröffnungen 12 durch den Stützkörper 13 verschlossen sind, was vorteilhafterweise den Eintritt von Fremdkörpern in das Lagergehäuse 1 sowie dessen über-mäßige Verschmutzung verhindert.

Abweichend von diesem Beispiel könnten auch die restlichen Randstreifen der Halbschalen 2, 3 zu einer dritten Fensteröffnung ausgespart sein. Dadurch ließe sich die Zahnstange 11 in zwei weiteren Winkelstellungen einsetzen und das Lagergehäuse 1 wäre variabler.

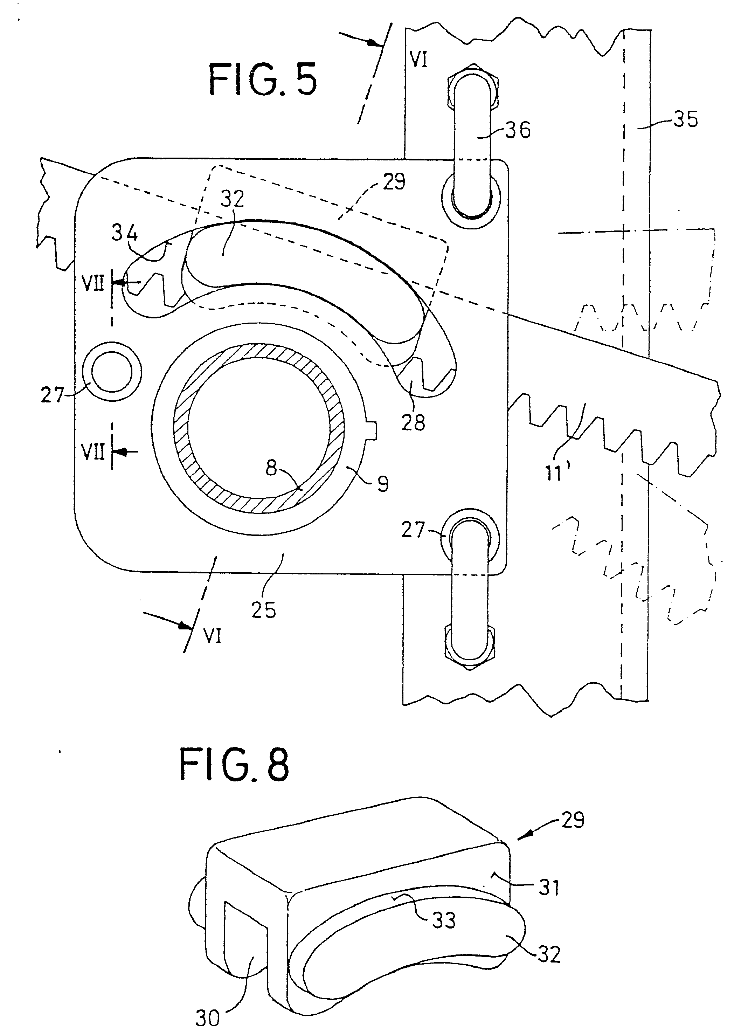

Das Lagergehäuse des Zahnstangentriebes nach den Figuren 5 bis 8 besteht aus zwei Seitenwänden 25 und 26 aus etwa 4 mm starkem Flachmaterial und von im wesentlichen quadratischer Form. Drei rohrförmige Distanzstücke 27 verbinden die Seitenwände in paralleler Anordnung im Abstand miteinander. Die Distanzstücke 27 sind nach Art von Hohlnieten umgebördelt, so daß die durchgehenden Rohröffnungen unbehindert bleiben. Jede der beiden Seitenwände 25 und 26 hat eine runde Lageröffnung zur Aufnahme von Lagerringen 9 wie im ersten Beispiel und, konzentrisch dazu, einen bogenförmigen Führungsschlitz 28. Während die Lagerung des Ritzels 7 sich von dem zuvor beschriebenen Beispiel nicht unterscheidet, sieht der hier verwendete Stützkörper 29 anders aus.

Er hat die Grundform eines Quaders mit einer Längsnut nur wenig größerer Breite als die hier verwendete Zahnstange 11'. Dieser Stützkörper 29 legt sich über den Zahnstangenrücken, so daß die Rückenfläche auf dem Boden der Nut 30 kraftschlüssig aufliegt. Die Seitenflächen 31 des Stützkörpers 29 liegen innen an den Seitenwänden 25 und 26 des Lagergehäuses an und geben der Zahnstange 11' somit eine seitliche Führung. An den Seitenflächen 31 ist je ein nierenförmiger Ansatz 32 angeformt, der hinsichtlich seiner Längskrümmung und Breite in den betreffenden Führungsschlitz 28 paßt. Die konvex gekrümmte Außenlagerfläche 33 der nierenförmigen Ansätze 32 gleitet auf der konkav gekrümmten Innenlagerfläche 34 des jeweiligen Führungsschlitzes 28 und hindert somit die Zahnstange 11' daran, aus der Verzahnung zu springen. Da die Führungsschlitze 28 längere Bögen bilden als die Ansatze 32 lassen sich letztere und damit der Stützkörper 29 samt Zahnstange 11' um die Ritzelachse schwenken.

Abweichend vom ersten Ausführungsbeispiel ist dieses Lagergehäuse nicht starr an dem gezeigten, zu einer Gebäudekonstruktion gehörenden querschnittlich winkelförmigen Träger 35 befestigt. Das Lagergehäuse hängt vielmehr locker an zwei U-Ankern 36, deren mit Gewinde versehene. Schenkelenden den Träger 35 durchsetzen und mittels zweier Kontermuttern an diesem befestigt sind. Je ein Schenkel der beiden U-Anker 36 greift durch eines der beiden an den Ecken des Lagergehäuses angeordneten Distanzstücke 27, wobei darauf hinzuweisen ist, daß der Schenkeldurchmesser des U-Ankers wesentlich geringer ist als der Innendurchmesser des Distanzstücks 27. Auf diese Weise läßt sich das Lagergehäuse nicht nur in Längsrichtung der Antriebswelle auf den U-Ankern 36 verschieben, sondern auch nach Maßgabe des erwähnten Spiels in jeder Richtung schwenken. Der Zahnstangentrieb ist somit gegenüber entsprechenden Belastungen nachgiebig und dadurch gegen Bruch und Verschleiß in hohem Maße gesichert, obwohl die Montage überall schnell und einfach durchzuführen ist.

Die Erfindung beschränkt sich im übrigen nicht auf die gezeigten Befestigungsarten des Lagergehäuses und auch nicht auf einen rechteckigen Zahnstangenquerschnitt. Vielmehr kann die Befestigung dem jeweiligen Bedarf und der Stützkörper jedem Zahnstangenquerschnitt angepaßt werden.

**Patentansrpüche**

1. Zahnstangentrieb, insbesondere zur Betätigung von Fensterflügeln (17), mit einem feststehenden Lagergehäuse (1), in welchem ein Ritzel (7) oder eine mit dem Ritzel (7) fest verbundene Antriebswelle (20) drehbar gelagert ist, und mit einer Zahnstange (11; 11'), die mittels eines um die Ritzelachse schwenkbaren Führungsteils mit dem Ritzel in Eingriff gehalten wird, dadurch gekennzeichnet, daß das Lagergehäuse (1) eine zum Ritzel (7) gleichachsige kreisbogenförmige Innenlagerfläche (10; 34) aufweist, und daß das Führungsteil als gleitfähiger Stützkörper (13; 29) ausgebildet ist, der zwischen dem Rücken der Zahnstange (11; 11') und der Innenlagerfläche (10; 34) eingepaßt ist.

2. Zahnstangentrieb nach Anspruch 1, dadurch gekennzeichnet, daß das Lagergebäuse (1) die Form einer das Ritzel (7) umschließenden flachen Dose hat, bestehend aus zwei Halbschalen (2, 3), in denen das Ritzel (7) gelagert ist und deren Umfangswandungen die Innenlagerfläche (10) bilden, wobei Fensteröffnungen (12) zum Durchtritt der Zahnstange (11) zwischen den Halbschalen freigespart sind.

3. Zahnstangentrieb nach Anspruch 1, dadurch gekennzeichnet, daß der Stützköprer (13) die Zahnstange (11) umgreift und ihre Flanken an Radialflächen (14) des Lagergehäuses (1) abstützt.

4. Zahnstangentrieb nach Anspruch 2, dadurch gekennzeichnet, daß der Stützkörper (13) in Umfangsrichtung der Innenlagerfläche (10) verlängert ist und dem Zahnstangenquerschnitt entsprechende Durchlässe aufweist.

5. Zahnstangentrieb nach Anspruch 1, dadurch gekennzeichnet, daß das Ritzel (7) eine Hohlnabe (8) aufweist und auf einer durchgesteckten Antriebswelle (20) befestigbar ist.

6. Zahnstangentrieb nach Anspruch 1, dadurch gekennzeichnet, daß das Lagergehäuse zwei in einem Abstand miteinander verbundene, zueinander parallele Seitenwände (25, 26) aufweist, in denen das Ritzel (7) gelagert ist und die nierenförmige Schlitze (28) aufweisen, deren radial äußere Ränder die Innenlagerfläche (34) bilden und in die ein Stützkörper (29) mit seitlich angeordneten, der Schlitzbreite entsprechenden Ansätzen (32) in Umfangsrichtung gleitfähig eingreift.

7. Zahnstangentrieb nach Anspruch 6, dadurch gekennzeichnet, daß rohrförmige Distanzstücke (27) vorgesehen sind, deren im Durchmesser reduzierte Enden in Bohrungen der Seitenwände (25, 26) des Lagergehäuses eingreifen und außen umgebördelt sind.

8. Zahnstangentrieb nach einem der vorhergehenden Ansprüche, dadurch gekennzeichnet, daß der Stützkörper (13;29) aus einem gleitfähigen Kunststoff besteht.

9. Zahnstangentrieb nach einem der Ansprüche 6 oder 7 dadurch gekennzeichnet, daß Befestigungsorgane (36) vorgesehen sind, die mit allseitigem Spiel in Aussparungen des Lagergehäuses eingreifen und dieses nachgiebig an einer Unterlage (35) haltern.

10. Zahnstangentrieb nach Anspruch 9, dadurch gekennzeichnet, daß die Befestigungsorgane (36) als U-förmig gebogene Rundstahlteile mit Schraubgewinden an den Schenkelenden ausgebildet sind, die mit wenigstens einem Schenkel das Lagergehäuse locker durchsetzen.

11. Zahnstangentrieb nach einem der vorhergehenden Ansprüche, dadurch gekennzeichnet, daß zwei mit einem Ritzel kämmende gegenläufige Zahnstangen mit je eigenen Stützkörpern vorgesehen sind.

**Claims**

1. Rack drive, particularly for the actuation of window is a rotatably mounted pinion (7) or a drive shaft (20) which is rigidly connected to the pinion (7), and having a rack (11, 11') held in engagement with the pinion by means of a guide part pivotable about the pinion axis, characterised in that the bearing housing (1) has an arcuate inner bearing face (10, 34) which is equiaxial with the pinion (7), and in that the guide part is constructed as a freely slideable supporting member (13, 29) fitted between the back of the rack (11, 11') and the inner bearing face (10' 34).

2. Rack drive according to Claim 1, characterised in that the bearing housing (1) takes the form of a flat cylindrical housing enclosing the pinion (7) and consisting of two half shells (2, 3) in which the pinion (7) is mounted and the peripheral walls of which constitute the inner bearing face (10), apertures (12) being provided between the half shells to allow passage of the rack (11).

3. Rack drive according to Claim 1, characterised in that the supporting member (13) engages around the rack (11), its flanks being supported on radial faces (14) of the bearing housing (1).

4. Rack drive according to Claim 2, characterised in that the supporting member (13) is extended in the peripheral direction of the inner bearing face (10) and has apertures corresponding to the rack cross-section.

5. Rack drive according to Claim 1, characterised in that the pinion (7) has a hollow hub (8) and is adapted to be mounted on a pushed-through drive shaft (20).

6. Rack drive according to Claim 1, characterised in that the bearing housing has, connected at a distance from each other, two mutually prallel side walls (25, 26) in which the pinion (7) is mounted and which have kidneyshaped slots (28), of which the radially outer edges form the inner bearing face (34) and into which a supporting member (29) with laterally disposed projections (32) corresponding to the width of the slot engages in such a way as to be freely slideable in a peripheral direction.

7. Rack drive according to Claim 6, characterised in that tubular spacers (27) are provided, of which the reduceddiameter ends engage in bores in the side walls (25, 26) of the bearing housing and are flanged over externally.

8. Rack drive according to one of the preceding Claims, characterised in that the supporting member (13, 29) consists of a freely slideable synthetic plastics material.

9. Rack drive according to one of Claims 6 or 7, characterised in that fixing means (36) are provided which, with clearance all round, engage in recesses in the bearing housing supporting this in resilient manner on a support (35).

10. Rack drive according to Claim 9, characterised in that the fixing members (36) are constructed on the ends of the arms as round steel parts bent into a U-shape and having screwthreads, at least one arm passing loosely through the bearing housing.

11. Rack drive according to one of the preceding Claims, characterised in that two oppositely moving racks meshing with one pinion are each provided with their own supporting members.

## Revendications

1 - Commande à crémaillère, en particulier pour l'actionnement de battants de fenêtres (17), comportant un logement de palier fixe (1), dans lequel un pignon (7) ou un arbre moteur (20) relié fixement au pignon (7) est monte rotatif, et une crémaillère (11,11'), qui est maintenue en engrènement avec le pignon au moyen d'une partie de guidage pouvant pivoter autour de l'axe du pignon,
caractérisée en ce que le logement de palier (1) comporte une surface de palier intérieure (10,34) en arc de cercle coaxiale au pignon (7) et en ce que la partie de guidage est constituée d'un corps de support (13,29) pouvant glisser qui est emboîté entre le dos de la crémaillère (11,11') et la surface de palier intérieure (10,34).

2 - Commande à crémaillère selon la revendication 1, caractérisée en ce que le logement de palier (1) présente la forme d'une boîte plate enveloppant le pignon (7), constituée de deux demi-coquilles (2,3) dans lesquelles le pignon (7) est monte et dont les parois péripheriques forment la surface de palier intérieure (10), des ouvertures (12) étant ménagées entre les demi-coquilles pour le passage de la crémaillère (11).

3 - Commande à crémaillère selon la revendication 1, caractérisée en ce que le corps de support (13) enveloppe la crémaillère (11) et appuie ses flancs sur des surfaces radiales (14) du logement de palier (1).

4 - Commande à crémaillère selon la revendication 2, caractérisée en ce que le corps de support (13) est prolongé dans la direction périphérique de la surface de palier intérieure (10) et comporte des passages correspondant à la section transversale de la crémaillère.

5 - Commande à crémaillère selon la revendication 1, caractérisée en ce que le pignon (7) comporte un moyeu creux (8) et peut être fixé sur un arbre moteur (20) passant au travers de celui-ci.

6 - Commande à crémaillère selon la revendication 1, caractérisée en ce que le logement de palier comporte deux parois latérales (25,26) parallèles l'une par rapport à l'autre et reliées l'une à l'autre avec un certain écartement, dans lesquelles le pignon (7) est monté et qui comporte des rainures réniformes (28) dont les bords radialement externes forment les surfaces de palier intérieures (34) et dans lesquelles un corps de support (29) avec des saillies (32) disposées latéralement et correspondant à la largeur des rainures s'engage en pouvant glisser dans la direction périphérique.

7 - Commande à cremaillère selon la revendication 6, caractérisée en ce que des pièces d'écartement tubulaires (27) sont prévues dont les extrémités de diamètre réduit s'engagent dans des alésages des parois latérales (25,26) du logement de palier et sont rabattues vers l'exterieur.

8 - Commande à crémaillère selon l'une des revendications précédentes,
caractérisée en ce que le corps de support (13,29) est constitué d'une matière synthétique apte au glissement.

9 - Commande à crémaillère selon l'une des revendications 6 ou 7,
caractérisée en ce que des organes de fixation (36) sont prévus qui s'engagent avec un jeu de tout côté dans des évidements du logement de palier et maintiennent celui-ci de façon souple sur une base (35).

10 - Commande à crémaillère selon la revendication 9, caractérisée en ce que les organes de fixation (36) sont réalisés sous forme de parties de barre ronde en acier courbées en U et comportant des filetages aux extrémités de leurs branches, qui, par au moins une branche, traversent, de façon lâche, le logement de palier.

11 - Commande à crémaillère selon l'une des revendications précédentes,
caractérisée en ce que deux crémaillères opposées engrenant avec un pignon sont prévues, chacune avec son propre corps de support.

FIG. 1

FIG. 4

FIG. 2

FIG. 3

# FIG. 6

# FIG. 7

0 121 062

# FIG. 5

# FIG. 8

7